(19) Europäisches Patentamt
European Patent Office
Office européen des brevets

(11) **EP 2 543 907 A2**

(12) **EUROPÄISCHE PATENTANMELDUNG**

(43) Veröffentlichungstag:
   **09.01.2013  Patentblatt 2013/02**

(51) Int Cl.:
   **F16F 1/366** (2006.01)

(21) Anmeldenummer: **12175212.5**

(22) Anmeldetag: **05.07.2012**

(84) Benannte Vertragsstaaten:
   **AL AT BE BG CH CY CZ DE DK EE ES FI FR GB GR HR HU IE IS IT LI LT LU LV MC MK MT NL NO PL PT RO RS SE SI SK SM TR**
   Benannte Erstreckungsstaaten:
   **BA ME**

(30) Priorität: **08.07.2011   DE 102011051674**

(71) Anmelder: **Technische Universität Darmstadt**
   **64289 Darmstadt (DE)**

(72) Erfinder:
   • **Schürmann, Helmut**
    **67133 Maxdorf (DE)**
   • **Feldten, Daniela**
    **64285 Darmstadt (DE)**

(74) Vertreter: **Katscher Habermann Patentanwälte**
   **Dolivostrasse 15A**
   **64293 Darmstadt (DE)**

(54) **Federelement aus einem Faserverbundwerkstoff und Verfahren zur Herstellung eines Faserverbundwerkstoffs**

(57) Ein Federelement (1) aus einem Faserverbundwerkstoff mit zumindest bereichsweise unidirektional verlaufenden Fasern (3) aus einem zugfesten Material, die in einer Matrix (2) aus einem geeigneten Kunststoffmaterial eingebettet sind, weist zusätzlich längliche Gebilde (4) aus einem zähen Material auf, die in der Matrix (2) angeordnet sind. Die länglichen Gebilde (4) sind im Wesentlichen parallel zu den Fasern (3) angeordnet. Die länglichen Gebilde (4) sind fadenförmig oder bandförmig ausgestaltet und können quasiendlos ausgebildet sein. Die länglichen Gebilde (4) können auch jeweils als eine Ummantelung (10) einer Faser (3) ausgestaltet sein. Das Volumen der länglichen Gebilde (4) beträgt mehr als 20 %, vorzugsweise mehr als 30 % des Volumens der Fasern (3). Das Volumen der länglichen Gebilde (4) ist so vorgegeben, dass bei einer möglichst dichten Packung der Fasern (3) und der länglichen Gebilde (4) in der Matrix (2) der Volumenanteil der Fasern (3) weniger als 60 %, vorzugsweise etwa 50 % beträgt.

Fig. 3

EP 2 543 907 A2

**Beschreibung**

Federelement aus einem Faserverbundwerkstoff und Verfahren zur Herstellung eines Faserverbundwerkstoffs

Die Erfindung betrifft ein Federelement aus einem Faserverbundwerkstoff mit zumindest bereichsweise unidirektional verlaufenden Fasern aus einem zugfesten Material, die in einer Matrix aus einem geeigneten Kunststoffmaterial eingebettet sind.

Federelemente können beispielsweise dazu verwendet werden, die Auswirkungen von Stößen und Schwingungen auf ein in geeigneter Weise mit den Federelementen gefedertes Objekt zu verringern. Im Kraftfahrzeugbereich werden beispielsweise Blattfedern, Mäanderfedern, Tellerfedern oder Torsionsfedern in unterschiedlichen Baugruppen eingesetzt. Die einzelnen Federelemente bestehen üblicherweise aus einem geeigneten Federstahl, der zum einen die für die Federwirkung erforderlichen Eigenschaften aufweist und zum anderen weitgehend unempfindlich gegenüber den während des Betriebs auftretenden Umgebungsbedingungen insbesondere hinsichtlich der Temperatur und der Feuchtigkeit ist.

Um Gewicht einsparen zu können ist es aus der Praxis bekannt, dass auch im Kraftfahrzeugbereich Federelemente eingesetzt werden, die aus einem Faserverbundwerkstoff bestehen. Üblicherweise werden endlose Glasfasern oder andere Fasern aus einem geeigneten zugfesten Material in eine Kunststoffmatrix eingebettet. Bei vergleichbaren Federeigenschaften kann durch die Verwendung von Faserverbundwerkstoffen üblicherweise eine ganz erhebliche Gewichtseinsparung vorgenommen werden. Durch die Verwendung geeigneter Materialien und Herstellungsverfahren lassen sich Federelemente aus einem Faserverbundwerkstoff kostengünstig herstellen, deren Eigenschaften den für den Kraftfahrzeugbereich relevanten Eigenschaften von Federelementen aus Federstahl ebenbürtig oder überlegen sind.

Ein wichtiger Aspekt der Federelemente aus Faserverbundwerkstoff ist dabei deren Zeitfestigkeit. Durch schwingende Belastung kann nicht ausgeschlossen werden, dass in einem Federelement aus Faserverbundwerkstoff einzelne Filamente versagen und der weitere Rissverlauf innerhalb der Matrix bis zu einer benachbarten Faser läuft, so dass die Faser bricht oder reißt und dadurch die lasttragenden Elemente des Faserverbundwerkstoffs beschädigt werden.

Da die Fasern die lasttragenden Elemente bilden und aus einem möglichst zugfesten Material bestehen sollen, lässt sich das Material der Fasern nicht beliebig verändern, um dadurch die Auswirkungen einer Rissbildung auf die einzelnen Fasern verringern zu können.

Aus der Praxis ist es bekannt, in die Matrix, die aus einem geeigneten Kunststoffmaterial besteht, kleine Partikel oder ein Pulver einzubringen, um dadurch der Ausbildung und Verbreitung von Rissen in dem Matrixmaterial entgegenzuwirken. Es hat sich gezeigt, dass ein ganz erheblicher Anteil an Partikel oder Pulver erforderlich ist, um einer Rissbildung und Rissausbreitung in dem Matrixmaterial in einem nennenswerten Umfang entgegenwirken zu können. Es ist ein hoher Herstellungsaufwand erforderlich, um eine möglichst homogene Verteilung der Partikel oder des Pulvers in dem Matrixmaterial erreichen und gewährleisten zu können. Zudem verändern sich durch die Einbettung von Partikeln oder Pulvermaterial die Eigenschaften des Matrixmaterials, so dass eine verringerte Rissausbreitung und eine dadurch gesteigerte Ermüdungsfestigkeit zu Lasten der Eigenschaften und insbesondere der mechanischen Eigenschaften des Matrixmaterials gehen, die für das Federelement von erheblicher Bedeutung sind.

Es wird deshalb als Aufgabe der vorliegenden Erfindung angesehen, ein Federelement aus einem Faserverbundwerkstoff der eingangs genannten Gattung so auszugestalten, dass mit einem möglichst geringen Aufwand die Rissbildung in dem Federelement gehemmt bzw. verringert oder um die lasttragenden Elemente, bzw. die Fasern herumgelenkt wird und die mechanischen Eigenschaften des Federelements nicht oder lediglich geringfügig beeinträchtigt werden.

Diese Aufgabe wird erfindungsgemäß dadurch gelöst, dass in dem Federelement längliche Gebilde aus einem zähen Material angeordnet sind. Die Anordnung länglicher Gebilde in dem Federelement lässt sich auf Grund der Erstreckung der länglichen Gebilde wesentlich einfacher und besser kontrollieren als beispielsweise Pulver oder kleine Partikel aus einem zähen Material. Als längliche Gebilde werden dabei alle Formgebungen bezeichnet, bei denen die Länge mindestens ein Mehrfaches der Breite oder der Dicke des Gebildes beträgt. Auf diese Weise lässt sich mit einem geringen Herstellungsaufwand beispielsweise eine weitgehend homogene räumliche Verteilung der länglichen Gebilde in dem Matrixmaterial, bzw. in dem Federelement vorgeben.

Im Gegensatz zu der Einbringung von Pulver oder Partikeln in das Matrixmaterial kann durch die Verwendung länglicher Gebilde eine von einer homogenen Verteilung abweichende Anordnung der länglichen Gebilde in dem Federelement bzw. in dem Matrixmaterial vorgegeben werden. So können beispielsweise die länglichen Gebilde überwiegend oder ausschließlich in den Randbereichen des Federelements mit großem Spannungsgradient konzentriert werden, um einer an den Außenflächen des Federelements beginnenden Rissbildung entgegenzuwirken.

Eine besonders einfache Herstellung eines derartigen Federelements wird dadurch ermöglicht bzw. erleichtert, dass die länglichen Gebilde im Wesentlichen parallel zu den Fasern angeordnet sind. Durch eine mit den Fasern übereinstimmende Ausrichtung der länglichen Gebilde kann deren Anordnung innerhalb des Federelements mit geringem Aufwand vorgegeben werden, ohne dass zusätzliche Verarbeitungsschritte oder weitere Vorgaben und Kontrollen während der Herstellung des Federelements erforderlich werden.

Einer vorteilhaften Ausgestaltung des Erfindungsgedankens zu Folge ist vorgesehen, dass die länglichen Gebilde fadenförmig oder bandförmig ausgestaltet sind. Die fadenförmigen oder bandförmigen Gebilde können quasi-endlos ausgebildet sein. Bei den länglichen Gebilden kann es sich um Fasern handeln, die aus einem geeigneten zähen Material hergestellt sind. Die länglichen Gebilde können auch eine begrenzte Länge aufweisen, die jedoch ein Vielfaches der Dicke, bzw. Breite der länglichen Gebilde betragen sollte, um eine vorgebbare Ausrichtung der länglichen Gebilde bei den üblichen Herstellungs- und Bearbeitungsverfahren zu ermöglichen.

Vorzugsweise sind die länglichen Gebilde gemäß einer alternativen Ausgestaltung des Erfindungsgedankens jeweils als eine Ummantelung einer Faser aus einem zugfesten Material ausgestaltet. Im Gegensatz zu den aus dem Stand der Technik bereits bekannten Beschichtungen von Fasern, die zur Herstellung von Federelementen aus einem Faserverbundwerkstoff verwendet werden, beträgt die Dicke der Ummantelung mehr als 5 % oder mehr als 10 % des Durchmessers der Fasern aus einem zugfesten Material. Es handelt sich demzufolge nicht um eine dünne Beschichtung, die als Schlichte bezeichnet wird und bekanntermaßen auf den lasttragenden Fasern aufgebracht werden kann, um deren Verarbeitungseigenschaften oder deren Haftung bei der Einbettung in der Matrix zu verbessern.

Die Dicke der Ummantelung wird zweckmäßigerweise so vorgegeben, dass die mechanischen Eigenschaften der Ummantelung deutlich von den mechanischen Eigenschaften der mit der Ummantelung umgebenen Fasern aus einem zugfesten Material abweichen und durch die Bruchzähigkeit der Ummantelung die ummantelten Fasern vor einer übermäßigen mechanischen Beanspruchung und insbesondere vor einer Rissbildung geschützt werden.

Es hat sich gezeigt, dass eine Ermüdungsfestigkeit des Federelements merklich verbessert werden kann, wenn das Volumen der länglichen Gebilde mehr als 20 %, vorzugsweise mehr als 30 % des Volumens der Fasern beträgt. Durch eine geeignete räumliche Anordnung der länglichen Gebilde in dem Federelement in Verbindung mit einer geeigneten Materialauswahl, wobei nicht nur die Bruchzähigkeit, sondern auch die Haftung des zähen Materials innerhalb der Matrix und gegebenenfalls zu den Fasern aus einem zugfesten Material von Bedeutung ist, lassen sich die Auswirkungen von Umgebungseinflüssen und Verschleißerscheinungen auch durch Reibermüdung innerhalb des Werkstoffs auf das Federelement ganz erheblich verringern.

Einer Ausgestaltung des Erfindungsgedankens zu Folge ist vorgesehen, dass das Volumen der länglichen Gebilde so vorgegeben ist, dass bei einer möglichst dichten Packung der Fasern und der länglichen Gebilde in der Matrix der Volumenanteil der Fasern weniger als 60 %, vorzugsweise etwa 50 % beträgt. Es hat sich gezeigt, dass für schwingungsbeanspruchte Federelemente ein geringer Volumenanteil der Fasern aus einem zugfesten Material vorteilhaft ist. Aus der Praxis ist jedoch bekannt, dass es bei der Herstellung eines Federelements nicht oder nur mit einem erheblichen Aufwand möglich ist, einige wenige Fasern mit einer homogenen räumlichen Verteilung in der Matrix anzuordnen. Wenn der Volumenanteil der Fasern aus einem zugfesten Material zu gering ist, bilden sich oftmals Fasercluster und benachbart Bereiche, in denen nur wenige oder keine Fasern angeordnet sind. Durch die inhomogene Verteilung der Fasern in der Matrix lassen sich die mechanischen Eigenschaften des Federelements kaum noch zuverlässig vorgeben bzw. vorhersagen. Um die für ein derartiges Federelement vorgegebenen Anforderungen zuverlässig bzw. nachweislich erfüllen zu können, muss ein solches Federelement deshalb größer als unbedingt erforderlich dimensioniert werden, was im Hinblick auf die Herstellungskosten, den Leichtbaugedanken und den Raumbedarf des Federelements nachteilig ist.

Wenn der Volumenanteil der fadenförmig oder bandförmig ausgestalteten länglichen Gebilde oder alternativ der Ummantelung der Fasern aus einem zugfesten Material geeignet vorgegeben wird, kann erreicht werden, dass die Fasern zusammen mit den fadenförmigen oder bandförmigen länglichen Gebilden bzw. alternativ die ummantelten Fasern beispielsweise mit einer hexagonalen Packung in die Matrix eingebettet werden, so dass dadurch eine homogene räumliche Verteilung der Fasern bewirkt bzw. vorgegeben wird.

Erste Untersuchungen haben ergeben, dass als Material für die länglichen Gebilde beispielsweise Aramid, Polyurethan (PU), Polyacrylnitril (PAN), Polyoxymethylen (POM), Polyamide (PA), Polethylentherephtalat (PET), Polyäthylen (PE) oder geeignete duroplastische Zweikomponenten-Systeme geeignet erscheinen. Das für die länglichen Gebilde verwendete Material soll eine möglichst hohe Bruchzähigkeit aufweisen und gleichzeitig gute Haftungseigenschaften sowohl in Bezug auf das Kunststoffmaterial der Matrix als auch zu den Fasern aus einem zugfesten Material haben. Bei den Fasern aus einem zugfesten Material handelt es sich üblicherweise um Glasfasern oder um Kohlenstofffasern. Das erfindungsgemäße Federelement kann beispielsweise im Heißpressverfahren aus geeigneten Prepregs hergestellt werden. Das Kunststoffmaterial der Matrix kann zusätzlich eine die Rissbildung hindernde Modifikation bzw. Zusammensetzung aufweisen.

Die Erfindung betrifft auch ein Verfahren zur Herstellung eines Faserverbundmaterials mit zumindest bereichsweise unidirektional verlaufenden Fasern aus einem zugfesten Material, die in einer Matrix aus einem geeigneten Kunststoffmaterial eingebettet sind, wobei in dem die Matrix bildenden Kunststoffmaterial quasi-endlose Fasern aus einem zähen Material angeordnet sind. Bei einem derartigen Faserverbundmaterial sind die länglichen Gebilde ebenfalls Fasern, die jedoch nicht aus einem zugfesten Material, sondern aus einem zähen Material bestehen.

Erfindungsgemäß ist vorgesehen, dass ein erster Roving aus Fasern aus einem zugfesten Material über einen ersten Walkbolzen geführt wird, dass ein zweiter Roving aus Fasern aus einem zähen Material über einen zweitem Walkbolzen geführt wird, und dass anschließend der aufgespreizte erste Roving aus Fasern aus einem zugfesten Material und der aufgespreizte zweite Roving aus Fasern aus einem zähen Material schichtartig übereinander angeordnet werden. Rovings sind handelsüblich erhältliche Bündel von endlosen, unverdrehten, gestreckten Fasern. Rovings können kostengünstig aus verschiedenen Materialien hergestellt sein und eine unterschiedliche Anzahl von gebündelten Fasern aufweisen. Durch die Walkbolzen können die strangförmigen Rovings in einer Ebene schichtartig aufgespreizt werden und bilden dann eine Faserschicht. Zu diesem Zweck können die Walkbolzen eine bauchige Formgebung bzw. eine in axialer Richtung konvex gekrümmte Außenfläche aufweisen. Durch die Anordnung von zwei derart aufgespreizten Rovings können zwar schichtartige, jedoch sehr homogene Mischungen von zwei verschiedenen Fasersorten hergestellt werden. Da sowohl das Führen eines Rovings über einen Walkbolzen als auch das Zusammenführen und übereinander Anordnen von zwei schichtartig aufgespreizten Rovings, bzw. von zwei Faserschichten in einem kontinuierlichen Dauerbetrieb durchgeführt werden können, lassen sich auf diese Weise sehr einfach, schnell und kostengünstig Faserverbundmaterialien herstellen, bei denen eine homogene Mischung von zwei Fasersorten in einer Matrix angeordnet sind.

Um je nach Verwendungszweck eine große Gesamtdicke der Schichtung aus aufgespreizten Rovings zu ermöglichen ist vorgesehen, dass jeweils mehrere aufgespreizte Rovings aus Fasern aus einem zugfesten Material und mehrere aufgespreizte Rovings aus Fasern aus einem zähen Material abwechselnd übereinander angeordnet werden. Auf diese Weise kann mit einfachen Mitteln sichergestellt werden, dass eine aus vielen einzelnen Faserschichten aus aufgespreizten Rovings hergestellte Faserschichtung eine sehr homogene Mischung der einzelnen Fasersorten beinhaltet.

Sofern das in dem Faserverbundmaterial angestrebte Mischungsverhältnis der einzelnen Fasersorten nicht mit dem Dickenverhältnis der einzelnen Faserschichten aus aufgespreizten Rovings übereinstimmt ist vorgesehen, dass die Schichtdicke einer Fasersorte, bzw. der betreffenden Faserschicht dadurch vergrößert werden kann, dass mehrere aufgespreizte Rovings aus Fasern aus einem zugfesten Material unmittelbar übereinander angeordnet werden oder dass mehrere aufgespreizte Rovings aus Fasern aus einem zähen Material unmittelbar übereinander angeordnet werden. Auf diese Weise lassen sich zuverlässig, rasch und kostengünstig nahezu beliebige Mischungsverhältnisse der einzelnen Fasersorten bei einer sehr homogenen Mischung innerhalb der Faserschichtung vorgeben.

Nachfolgend werden Ausführungsbeispiele des Erfindungsgedankens näher erläutert, die in der Zeichnung dargestellt sind. Es zeigt:

Fig. 1 eine schematische Schnittansicht eines Federelements, in dem zusätzlich zu Fasern aus einem zugfesten Material fadenförmige längliche Gebilde aus einem zähen Material eingebettet sind,

Fig. 2 eine Schnittansicht eines Federelements gemäß Fig. 1, wobei die fadenförmigen länglichen Gebilde in einem Randbereich des Federelements eine erhöhte Konzentration aufweisen,

Fig. 3 eine Schnittansicht durch ein Federelement, bei dem die Fasern aus einem zugfesten Material eine Ummantelung aus einem zähen Material aufweisen,

Fig. 4 eine Ansicht gemäß Fig. 3, wobei die ummantelten Fasern aus einem zugfesten Material gemäß einer idealen hexagonalen Packung in der Matrix angeordnet sind,

Fig. 5 eine schematische Darstellung eines Herstellungsverfahrens einer Faserschichtung für ein Faserverbundmaterial, dass aus Fasern aus einem zugfesten Material und aus Fasern aus einem zähen Material besteht, die in einer Matrix eingebettet sind, und

Fig. 6 eine Schnittansicht der mit dem in Fig. 5 gezeigten Verfahren hergestellten Faserschichtung längs der Linie VI-VI.

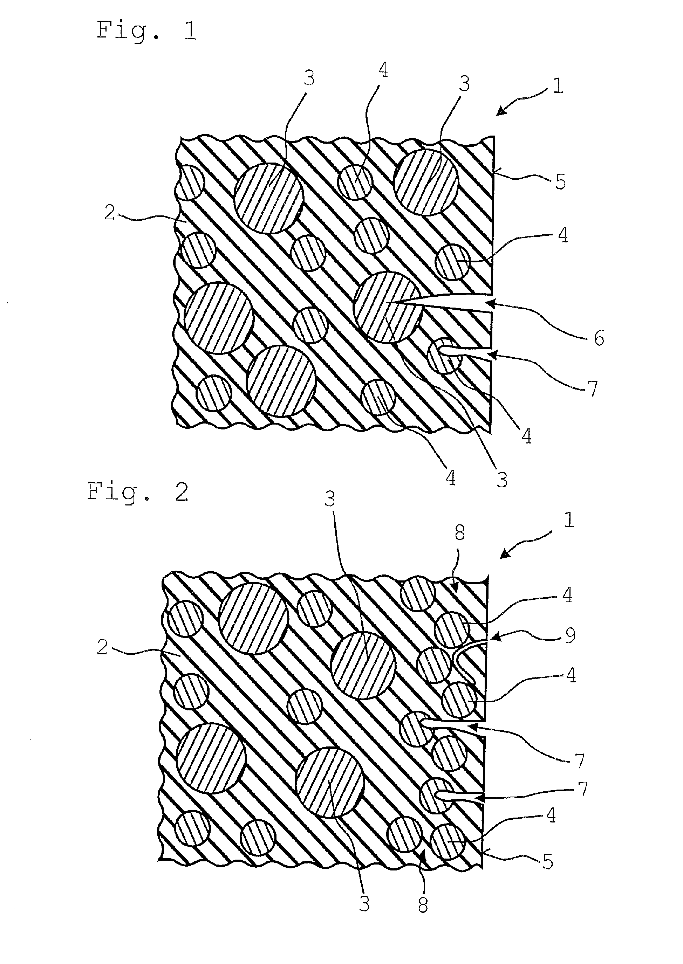

In den Fig. 1 und 2 ist jeweils eine Schnittansicht eines Bereichs eines Federelements 1 abgebildet, das aus einem Faserverbundwerkstoff besteht. In einer Matrix 2 aus einem Kunststoffmaterial sind Fasern 3 aus einem zugfesten Material und zusätzlich fadenförmige längliche Gebilde 4 aus einem zähen Material angeordnet. Ausgehend von einer äußeren Oberfläche 5 des Federelements 1 können sich begünstigt durch beanspruchende Umgebungsbedingungen sowie durch die Schwingungsbeanspruchung des Federelements 1 erste Risse 6 und zweite Risse 7 ausbilden, die in die Matrix 2 eindringen. Wenn ein erster Riss 6 bis an die Faser 3 aus einem zugfesten Material verläuft, wird die Faser 3 angekerbt und beschädigt. Die Erfahrungen mit herkömmlichen Federelementen aus einem Faserverbundwerkstoff haben gezeigt, dass die durch Rissbildung angegriffene Fasern 3 bei weiter andauernder mechanischer Belastung rasch beschädigt oder sogar durch Bruch oder Abriss vollständig zerstört werden und keinen Beitrag zur Lastaufnahme in dem Federelement 1 mehr leisten können.

Wenn jedoch ein zweiter Riss 7, wie in Fig. 1 schematisch dargestellt, auf ein längliches Gebilde 4 aus einem zähen Material trifft, wird eine weitere Ausbreitung des zweiten Risses 7 verhindert bzw. verlangsamt oder aber die Ausbreitungsrichtung des zweiten Risses 7 umgelenkt, so dass die nachteiligen Auswirkungen des zweiten Risses 7 auf die Fasern 3 erheblich abgeschwächt und die Ermüdungsfestigkeit des Federelements 1 gesteigert werden.

Bei dem in Fig. 2 exemplarisch dargestellten Ausführungsbeispiel weisen die länglichen Gebilde 4 in einem Randbereich 8 längs der äußeren Oberfläche 5 des Federelements 1 eine erhöhte Konzentration auf. Dadurch kann in verstärktem Maße einer sich von der äußeren Oberfläche 5 ausbreitenden Rissbildung entgegengewirkt werden.

Ein dritter Riss 9, der sich von der äußeren Oberfläche 5 in Richtung auf ein längliches Gebilde 4 ausbreitet, wird von dem länglichen Gebilde 4 abgelenkt und breitet sich in eine andere Richtung weiter aus. Durch die Ablenkung des dritten Risses 9 an dem länglichen Gebilde 4 verringert sich die effektive Eindringtiefe des Risses 9 und damit das Risiko, dass dieser Riss 9 auf eine Faser 3 aus einem zugfesten Material trifft und dieses beschädigt.

Es ist ebenfalls denkbar, dass sowohl die länglichen Gebilde 4 als auch die Fasern 3 aus einem zugfesten Material im Wesentlichen in dem Randbereich 8 längs der äußeren Oberfläche 5 des Federelements 1 konzentriert werden, da bei einer üblichen Schwingbeanspruchung des Federelements 1 vorwiegend in dem Randbereich 8 eine verformungsbedingte Zugbeanspruchung auftritt.

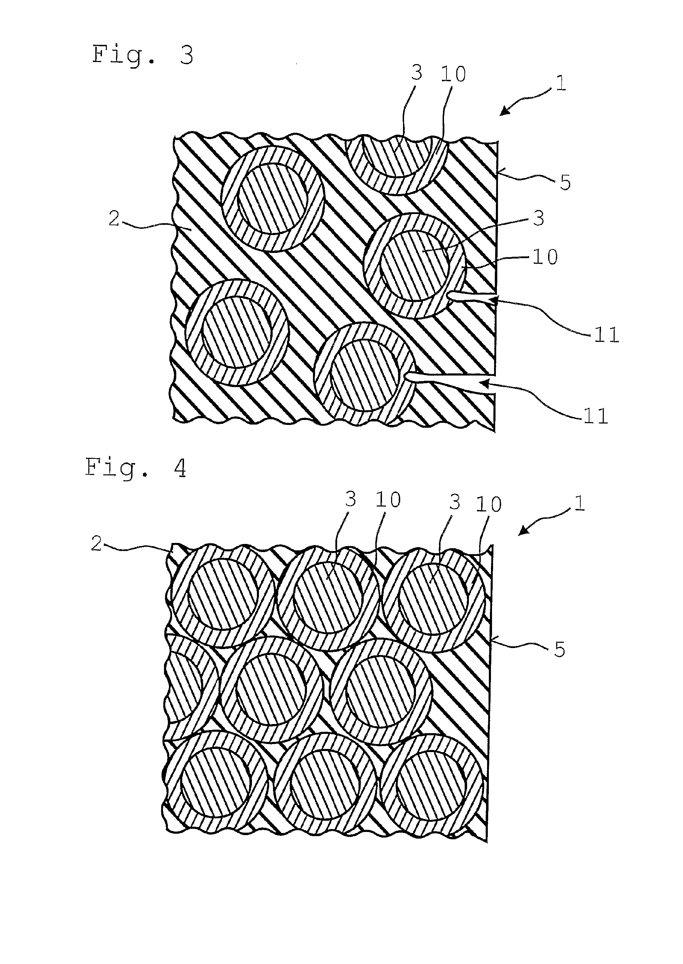

Bei den in den Fig. 3 und 4 exemplarisch dargestellten Ausführungsbeispielen weist das Federelement 1 Fasern 3 aus einem zugfesten Material auf, die jeweils mit einer Ummantelung 10 aus einem zähen Material umgeben sind. Ein von der äußeren Oberfläche 5 aus eindringender Riss 11 wird vor dem Erreichen der Faser 3 in der zähen Ummantelung 10 abgeschwächt und gestoppt, so dass eine Beschädigung der Faser 3 durch den Riss 11 vermieden wird. Da das zähe Material der Ummantelung 10 auf die Umgebung der Fasern 3 konzentriert und beschränkt ist, kann mit einem vergleichsweise geringen Volumenanteil an zähem Material eine Beschädigung der Fasern 3 durch in die Matrix 2 eindringende Risse 11 reduziert bzw. verhindert werden.

Bei dem in Fig. 4 schematisch dargestellten Ausführungsbeispiel sind die Fasern 3 aus einem zugfesten Material einschließlich der die Fasern 3 umgebenden Ummantelung 10 gemäß einer idealen hexagonalen Packung in der Matrix 2 angeordnet. Um einen Volumenanteil der Fasern 3 von etwa 50 % zu erreichen, beträgt eine Dicke d der Ummantelung 10 etwa 30 % von einem Radius r der Fasern 3. Die für einen Volumenanteil der Fasern 3 von 50 % erforderliche Dicke d der Ummantelung 10 kann gemäß der nachstehenden Gleichung

$$d = r \left( \sqrt{\frac{\pi}{\sqrt{3}}} - 1 \right)$$

ermittelt werden.

Bei einem geringfügig abweichend ausgestalteten Ausführungsbeispiel weisen die Fasern 3 aus einem zugfesten

Material einen Durchmesser von etwa 17 $\mu$m auf und sind von einer Ummantelung aus Polyurethan mit einer Manteldicke von etwa 0,35 $\mu$m umhüllt.

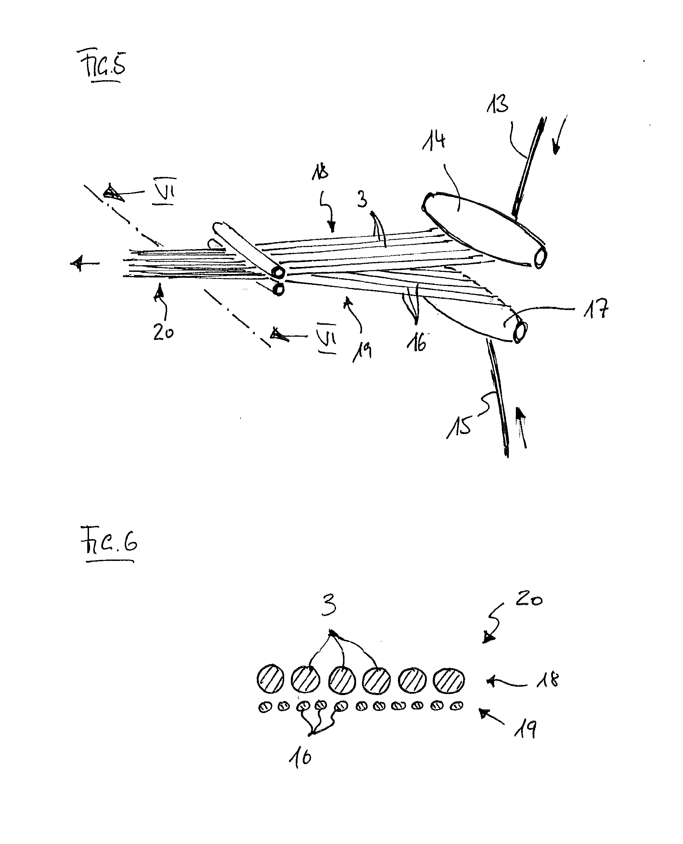

In Fig. 5 ist exemplarisch ein Herstellungsverfahren für eine Faserschichtung 12 gezeigt, die in Prepregs eingearbeitet und anschließend zu Federelementen weiterverarbeitet werden kann. Ein erster Roving 13 aus Fasern 3 aus einem zugfesten Material wird über einen ersten Walkbolzen 14 geführt und dabei aufgespreizt. Ein zweiter Roving 15 aus Fasern 16 aus einem zähen Material wird ebenfalls über einen zweiten Walkbolzen 17 geführt und dabei aufgespreizt. Die beiden aufgespreizten ersten und zweiten Rovings 13, 15 bilden jeweils eine ebene Faserschicht 18, 19. Die beiden Faserschichten 18, 19 können anschließend gleichgerichtet übereinandergeführt werden, um eine Faserschichtung 20 zu bilden. Da oftmals nach einem einmaligen Umlenken der Rovings 12, 15 über die zugeordneten Walkbolzen 14, 17 noch keine ausreichende Aufspreizung erfolgt ist, kann dieser Vorgang gegebenenfalls mehrfach wiederholt werden. Um eine ausreichende Aufspreizung und gleichförmige Verteilung der einzelnen Fasern 3, 16 in den Faserschichten 18 und 19 gewährleisten zu können ist vorgesehen, dass die Rovings 12, 15 über eine Anordnung von jeweils mehreren Walkbolzen 14, 17 und von mehreren Führungsbolzen und Führungsrollen geführt werden.

Die auf diese Weise hergestellte Faserschichtung 20 besteht aus der ebenen Faserschicht 18 und der darunter angeordneten ebenen Faserschicht 19. Die Anzahl der einzelnen Fasern 3, bzw. 16 der beiden Faserschichten 18 und 19 ist abhängig von den jeweils verwendeten ersten und zweiten Rovings 12, 15. Die Dichte und gegebenenfalls eine Mehrlagigkeit der einzelnen Fasern 3, 16 in den beiden Faserschichten 18 und 19 hängt auch von den Walkbolzen 14 und 17 bzw. der damit bewirkten Aufspreizung der Rovings 12, 15 ab und kann je nach Verwendungszweck vorgegeben werden.

**Patentansprüche**

1. Federelement aus einem Faserverbundwerkstoff mit zumindest bereichsweise unidirektional verlaufenden Fasern aus einem zugfesten Material, die in einer Matrix aus einem geeigneten Kunststoffmaterial eingebettet sind, **dadurch gekennzeichnet,**

**dass** in dem Federelement (1) längliche Gebilde (4) aus einem zähen Material angeordnet sind.

2. Federelement nach Anspruch 1, **dadurch gekennzeichnet, dass** die länglichen Gebilde (4) im Wesentlichen parallel zu den Fasern (3) angeordnet sind.

3. Federelement nach Anspruch 1 oder Anspruch 2, **dadurch gekennzeichnet, dass** die länglichen Gebilde (4) fadenförmig oder bandförmig ausgestaltet sind.

4. Federelement nach Anspruch 3, **dadurch gekennzeichnet, dass** die fadenförmigen oder bandförmigen länglichen Gebilde (4) quasi-endlos ausgebildet sind.

5. Federelement nach Anspruch 1 oder Anspruch 2, **dadurch gekennzeichnet, dass** die länglichen Gebilde (4) jeweils als eine Ummantelung (10) einer Faser (3) ausgestaltet sind.

6. Federelement nach einem der vorangehenden Ansprüche, **dadurch gekennzeichnet, dass** das Volumen der länglichen Gebilde (4) mehr als 20 %, vorzugsweise mehr als 30 % des Volumens der Fasern (3) beträgt.

7. Federelement nach einem der vorangehenden Ansprüche, **dadurch gekennzeichnet, dass** das Volumen der länglichen Gebilde (4) so vorgegeben ist, dass bei einer möglichst dichten Packung der Fasern (3) und der länglichen Gebilde (4) in der Matrix (2) der Volumenanteil der Fasern (3) weniger als 60 %, vorzugsweise etwa 50 % beträgt.

8. Verfahren zur Herstellung eines Faserverbundmaterials mit zumindest bereichsweise unidirektional verlaufenden Fasern (3) aus einem zugfesten Material, die in einer Matrix (2) aus einem geeigneten Kunststoffmaterial eingebettet sind, wobei in dem die Matrix (2) bildenden Kunststoffmaterial quasi-endlose Fasern (16) aus einem zähen Material angeordnet sind, **dadurch gekennzeichnet, dass** ein erster Roving (13) aus Fasern (3) aus einem zugfesten Material über einen ersten Walkbolzen (14) geführt wird, dass ein zweiter Roving (15) aus Fasern (16) aus einem zähen Material über einen zweiten Walkbolzen (17) geführt wird, und dass anschließend der aufgespreizte erste Roving (13) aus Fasern (3) aus einem zugfesten Material und der aufgespreizte zweite Roving (15) aus Fasern (16) aus einem zähen Material schichtartig übereinander angeordnet werden.

9. Verfahren nach Anspruch 8, **dadurch gekennzeichnet, dass** jeweils mehrere aufgespreizte erste Rovings (13) aus Fasern (3) aus einem zugfesten Material und mehrere aufgespreizte zweite Rovings (15) aus Fasern (16) aus einem zähen Material jeweils abwechselnd übereinander angeordnet werden.

10. Verfahren nach Anspruch 8 oder Anspruch 9, **dadurch gekennzeichnet, dass** mehrere aufgespreizte erste Rovings (13) aus Fasern (3) aus einem zugfesten Material unmittelbar übereinander angeordnet werden oder dass mehrere aufgespreizte zweite Rovings (15) aus Fasern (16) aus einem zähen Material unmittelbar übereinander angeordnet werden.

Fig. 1

Fig. 2

Fig. 3

Fig. 4

FIG.5

FIG.6